Europäisches Patentamt

European Patent Office

Office européen des brevets

(11) Veröffentlichungsnummer: **0 273 191 B1**

(12) **EUROPÄISCHE PATENTSCHRIFT**

(45) Veröffentlichungstag der Patentschrift: **31.07.91**

(51) Int. Cl.⁵: **B01D 3/00**

(21) Anmeldenummer: **87117197.1**

(22) Anmeldetag: **21.11.87**

(54) **Flüssigkeitsverteiler für Stoff- und Wärmeaustauschkolonnen.**

(30) Priorität: **29.11.86 DE 3640886**

(43) Veröffentlichungstag der Anmeldung:
**06.07.88 Patentblatt 88/27**

(45) Bekanntmachung des Hinweises auf die
Patenterteilung:
**31.07.91 Patentblatt 91/31**

(84) Benannte Vertragsstaaten:
**AT BE CH ES FR GB IT LI LU NL**

(56) Entgegenhaltungen:
EP-A- 0 112 978       DE-A- 2 945 103
DE-A- 3 118 836       DE-A- 3 141 930
DE-A- 3 306 636       DE-A- 3 346 857
DE-C- 3 409 524       GB-A- 2 163 063

(73) Patentinhaber: **Raschig AG**
**Mundenheimer Strasse 100**
**W-6700 Ludwigshafen/Rhein(DE)**

(72) Erfinder: **Grosshans, Werner, Dipl.-Ing. (FH)**
**Langstrasse 18**
**W-6701 Hochdorf-Assenheim(DE)**

(74) Vertreter: **Hubbuch, Helmut, Dipl.-Ing et al**
**Patentanwälte Dr. Rudolf Bauer Dipl.-Ing.**
**Helmut Hubbuch Dipl.-Phys. Ulrich Twelmei-**
**er Westliche Karl-Friedrich-Strasse 29-31**
**W-7530 Pforzheim(DE)**

## Beschreibung

Die Erfindung bezieht sich auf einen Flüssigkeitsverteiler für Stoff- und Wärmeaustauschkolonnen, welche einen Hauptverteiler mit parallelen Kanälen in Form trogartiger Rinnen mit Lochungen in deren Wandungen zum Flüssigkeitsaustritt aufweisen, wobei an den Außenseiten der Rinnenwandungen längslaufende Leitbleche mit nach unten ausgerichteten Abtropzungen vorgesehen sind.

Es sind Flüssigkeitsverteiler als Röhrchen- und Rinnenverteiler sowie auch in Kombination von beidem bekannt. So zeigt z.B. die EPA-A-112 978 eine solche Kombination von Verteilerrinnen mit angesetzten Röhrchen, was eine aufwendige Herstellung bedeutet und sich nur für größere Flüssigkeitsmengen eignet. Die DE-C-3 306 636 zeigt einen Rinnenverteiler mit Wandlochungen und Abropfzungen sowie eingehängten Führungsdrähten, wodurch sich eine aufwendige Montage ergibt. Die DE-C-2 945 103 und DE-C-3 409 524 zeigen ebenfalls Rinnenverteiler mit Wandlochungen, Abtropfzungen und darüber hinaus besonders vorgehängten Wänden mit Zungen zur Flüsigkeitsableitung, welche durch ihre Vielfalt zur Feinverteilung führen, aber dadurch auch sehr aufwendig und störanfällig sind und auch größere Flüssigkeitsmengen voraussetzen.

Aufgabe der Erfindung ist es nun Flüssigkeitsverteiler in einfacher und robuster Bauweise zu schaffen, welche sich sowohl für kleinere als auch für größere Flüssigkeitsmengen eignen und in allen Bereichen effektiv arbeiten und wenig störanfällig sind.

Hierzu kennzeichnet sich der Flüssigkeitsverteiler nach dem Oberbegriff des Anspruchs 1 dadurch, daß die ohne Abstand aufgesetzten Leitbleche mit Ausnehmungen ausgestattet sind, welche die Lochungen zumindest von unten umfangen, wobei ferner die Abtropfzungen zwischen den zu Ausnehmungen versetzt befindlichen Ausschnitten angeordnet sind. Hierdurch wird ein unkontrollierbares Ablaufen der Flüsigkeit nach dem Austreten aus den Wandlochungen und Sammelen am Trogunterrand vermieden; vielmehr wird jeweils ein Ableiten über die abgesetzten Ausnehmungen am Leitblech und Überführen an die Abtropfzungen unter Mithilfe der versetzten Ausschnitte am unteren Rand des längslaufenden Leitblechs erreicht.

Zusätzlich können die Leitbleche über den Lochungen an den Rinnenwandungen ausgestellte Lappen aufweisen, deren Ausschnitt die Lochungen vollständig umfangende Ausnehmungen bilden, wodurch bei austretendem Mehrwasser die Ausbildung eines Wasserstrahls vermieden und dieser auch in die Breite verteilt wird.

Weitere Einzelheiten des Flüssigkeitsverteilers gemäß der Erfindung ergeben sich aus den nachfolgend dargestellten und beschriebenen, bevorzugten Ausführungsbeispielen; in der Zeichnung zeigen:

Fig. 1 die Gesamtansicht eines Flüssigkeitsverteilers,

Fig. 2 und 3 die perspektivische Ansicht und den Querschnitt einer Verteilerrinne,

Fig. 4 bis 7 die Seitenansicht von weiteren Ausführungsformen und

Fig. 8 die Seitenansicht einer Ausführungsform mit ausgestellten Lappen.

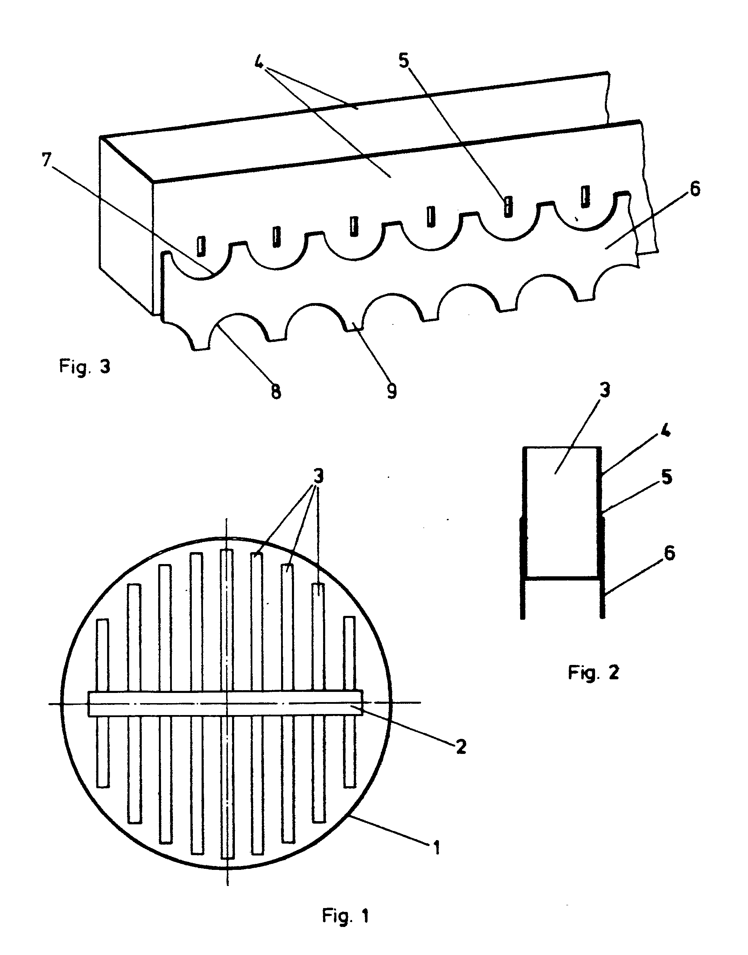

Wie aus der Gesamtansicht nach Fig. 1 ersichtlich wird, besteht hier der Flüssigkeitsverteiler für Stoff- und Wärmeaustauschkolonnen aus einem über der Medienverpackung im Kolonnenbehälter 1 angeordneten Hauptverteiler 2 mit darunterliegenden parallelen Kanälen in Form von trogartigen Rinnen 3, deren Wandungen 4 Lochungen 5 zum Flüssigkeitsaustritt aufweisen.

An den Außenseiten der Rinnenwandungen 4 sind gemäß der Erfindung entsprechend Fig. 2 ff jeweils längsseitig Leitbleche 6 ohne Abstand fest aufgesetzt, welche einerseits die Lochungen 5 mit Ausnehmungen 7 von unten umfangen und damit die an der Rinnenwandung ablaufende Flüssigkeit jeweils zu einzelnen Abläufen nach unten zentrieren, wobei die andererseits an den Leitblechen 6 nach unten, versetzt zu den Ausnehmungen 7 angeordneten Ausschnitte 8 die Flüssigkeitsleitung zu dem dazwischenliegenden, überstehenden Abtropfzungen 9 übernehmen. Somit bleibt die durch die Lochungen 5 erfolgende Vereinzelung des Flüssigkeitsablaufes erhalten und es kann kein Zusammenführen und unkontrolliertes Ablaufen entlang der unteren Rinnenkanten erfolgen.

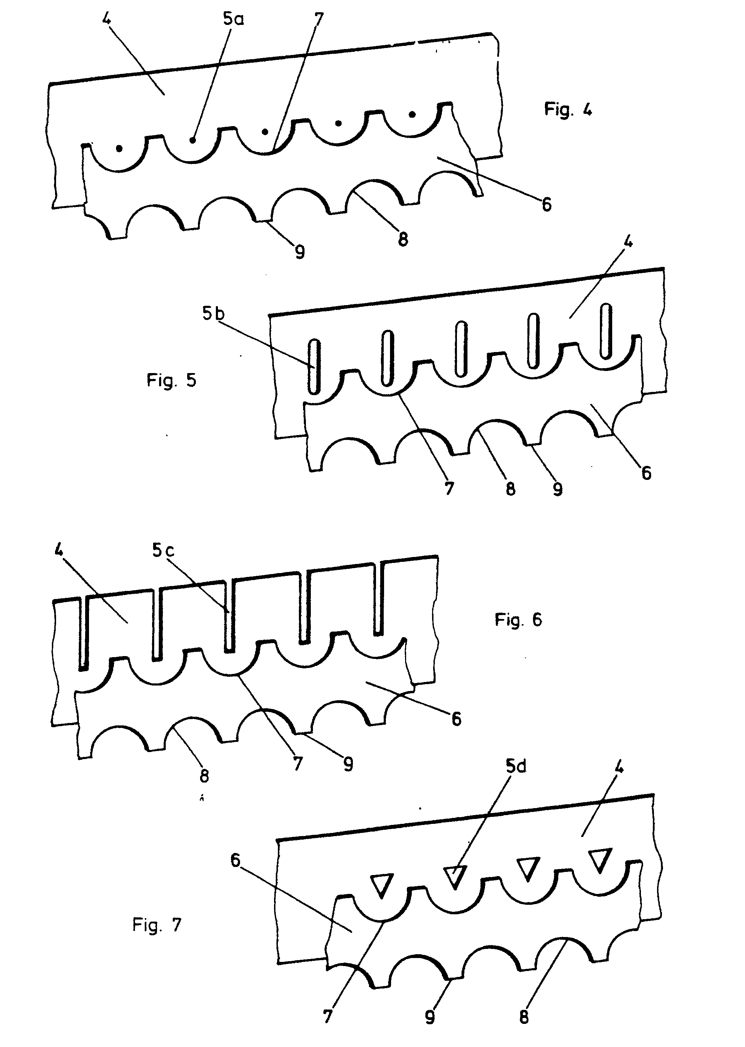

In den Fig. 4 bis 7 sind sodann weitere Ausführungsformen solcher Rinnenwandungen 4 mit Lochungen als Rundlöcher 5a, Langlöcher 5b, Randeinschnitte 5c und V-Ausschnitte 5d gezeigt mit jeweils längsseits aufgebrachten Leitblechen 6 mit nach oben gerichteten Sammler-Ausnehmungen 7 und nach unten, versetzt angeordneten Leit-Ausschnitten 8 mit zwischenliegenden Abtropfzungen 9.

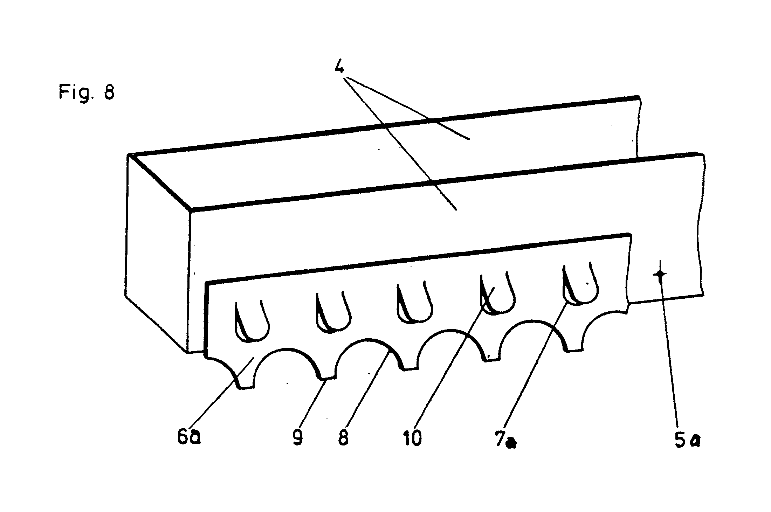

In Fig. 8 sind schließlich eine Rinnenwandung 4 mit Lochungen 5a dargestellt mit einem Leitblech 6a dessen Ausnehmungen 7a an den Lochungen 5a ausgestellte Lappen 10 aufweisen, während die Ausschnitte 8 hierzu versetzt nach unten die dazwischenliegenden Abtropfzungen 9, wie bisher bilden. Die ausgestellten Lappen 10 dienen dazu die Ausbildung eines Wasserstrahls bei austretendem Mehrwasser an den Lochungen 5a zu vermeiden und dieses Wasser in die Breite zu verteilen.

Bei den Ausführungsbeispielen von Fig. 2 bis 7 reicht an den Außenwänden 4 das Leitblech 6 seitlich der Lochungen 5 und 5a bis 5d diese umgreifend etwa auf halbe Höhe derselben (5) und bildet zwischenliegende Abgrenzungen, während beim Ausführungsbeispiel nach Fig. 8 das Leitblech 6a zwischen den Lochungen 5a an der Rinnenwandung 4 dieselben umgreift, wobei über denselben die Lappen 10 ausgeschnitten sind und beim Ausstellen die Ausnehmung 7a nach oben liegen, während die Ausschnitte 8 mit dazwischenliegenden Abtropfzungen 9, wie bei den vorhergehenden Ausführungsformen verbleiben. Schließlich können die Abtropfzungen 9, wie hier nicht besonders dargestellt, wechselweise ein-/ und ausgestellt und dazwischen auch senkrecht verbleibend sein.

**Patentansprüche**

1. Flüssigkeitsverteiler für Stoff- und Wärmeaustauschkolonnen, welche einen Hauptverteiler (2) mit parallelen Kanälen in Form trogartiger Rinnen (3) mit Lochungen (5;5a;5b;5c;5d) in deren Wandungen (4) zum Flüssigkeitsaustritt aufweisen, wobei an den Außenseiten der Rinnenwandungen (4) längsverlaufende Leitbleche (6;6a) mit nach unten ausgerichteten Abtropfzungen (9) vorgesehen sind, **dadurch gekennzeichnet**, daß die ohne Abstand aufgesetzten Leitbleche (6;6a) mit Ausnehmungen (7;7a) ausgestattet sind, welche die Lochungen (5;5a;5b;5c;5d) zumindest von unten umfangen, und die Abtropfzungen (9) zwischen zu den Ausnehmungen (7;7a) versetzt befindlichen Ausschnitten (9) angeordnet sind.

2. Flüssigkeitsverteiler nach Anspruch 1, **dadurch gekennzeichnet**, daß die Leitbleche (6a) über den Lochungen (5a) an den Rinnenwandungen (Außenwand 4) ausgestellte Lappen (10) aufweisen, deren Ausschnitte die Lochungen (5a) vollständig umfangenden Ausnehmungen (7a) bilden.

3. Flüssigkeitsverteiler nach Anspruch 1, **dadurch gekennzeichnet**, daß die Leitbleche (6) zwischen den die Lochungen (5;5a;5b;5c;5d) an den Rinnenwandungen (4) umfangenden Ausschnitten (7) mit zwischenliegenden Abgrenzungen bis etwa zur halben Höhe der Lochungen (5;5a;5b;5c;5d) reichen.

4. Flüssigkeitsverteiler nach einem der vorhergehenden Ansprüche, **dadurch gekennzeichnet**, daß die unter den oberen Ausnehmungen (7, 7a) liegenden Abtropfzungen (9) wechselweise ein- und ausgestellt sind.

**Claims**

1. Liquid distributor for mass and heat transfer columns comprising a master distributor (2) having parallel channels in the form of trough-like ducts (3) with openings (5, 5a, 5b, 5c, 5d) in the walls thereof to allow liquids to flow out, with longitudinally extending guiding panels (6, 6a) with downwardly directed drip tongues (7, 7a) being provided at the external sides of the duct walls (4), characterized in that the tightly mounted guiding panels (6, 6a) are provided with recesses (7. 7a) encompassing at least the bottom portion of the opening (5, 5a, 5b, 5c, 5d), and that the drip tongues (9) are arranged between cut-out sections (9) arranged in a staggered fashion relative to the recesses (7, 7a).

2. The apparatus according to claim 1, characterized in that the guiding panels (6a) have flaps (10) protruding above the openings (5a) from the walls of the ducts (outer wall 4), the cut-out sections of said flaps forming recesses (7a) completely covering the openings (5a).

3. The apparatus according to claim 1, characterized in that the guiding panels (6) between the recesses (7) encompassing the openings (5, 5a, 5b, 5c, 5d) at the duct walls (4) reach with their intermediate border sections to approximately halfway up the openings (5, 5a, 5b, 5c, 5d).

4. Apparatus according to any of the preceding claims, characterized in that the drip tongues (9) located below the upper recesses (7, 7a) are alternately protruding and inwardly bent.

**Revendications**

1. Distributeur de liquide pour des colonnes d'échange de matière et de chaleur, comprenant un distributeur principal (2) avec des canaux parallèles sous forme de gorges (3) conformées en auges dont les parois (4) présentent des perforations (5; 5a; 5b; 5c; 5d) pour la sortie du liquide, sur les faces extérieures des parois (4) des gorges étant prévus des déflecteurs (6; 6a) orientés dans le sens longitudinal et pourvus de languettes d'égouttage (9), **caractérisé en ce** que les déflecteurs (6; 6a) comportent des évidements (7; 7a) qui entourent les perforations (5; 5a; 5b; 5c; 5d) au moins par le bas et que les languettes d'égouttage (9) sont disposées entre des découpes (9) décalées par rapport aux évidements (7; 7a).

2. Distributeur de liquide selon la revendication 1, caractérisé en ce que les déflecteurs (6a) présentent audessus des perforations (5a), sur les parois des gorges (paroi extérieure 4), des pattes (10) dépassant vers l'extérieur et dont les découpes forment des évidements (7a) qui entourent entièrement les perforations (5a).

3. Distributeur de liquide selon la revendication 1, caractérisé en ce que, entre les découpes (7) qui entourent les perforations (5; 5a; 5b; 5c; 5d) sur les parois (4) des gorges, les déflecteurs (6) s'étendent avec des délimitations interposées jusqu' à environ la mi-hauteur des perforations (5; 5a; 5b; 5c; 5d).

4. Distributeur de liquide selon l'une des revendications précédentes, caractérisé en ce que les languettes d'égouttage (9) situées en dessous des évidements supérieurs (7, 7a) sont recourbées alternativement vers l'intérieur et vers l'extérieur.

Fig. 3

Fig. 2

Fig. 1

Fig. 4

Fig. 5

Fig. 6

Fig. 7

Fig. 8